# EUROPEAN PATENT APPLICATION

(11) **EP 4 611 376 A1**
(43) Date of publication of application: **03.09.2025**
(21) Application number: 23881880.1
(22) Date of filing: 25.10.2023
(51) Int. Cl.: H04N 21/431

(54) **INFORMATION DISPLAY METHOD AND APPARATUS**

(30) Priority: 25.10.2022 CN 202211314017
(71) Applicant: Beijing Zitiao Network Technology Co., Ltd., Beijing 100190 (CN)
(72) Inventor: LAI, Zhiwen, Beijing 100028 (CN); ZHANG, Tiantian, Beijing 100028 (CN)
(74) Representative: Marks & Clerk LLP
(86) International application number: PCT/CN2023/126455
(87) International publication number: WO 2024/088303

(57) **Abstract**

Disclosed in the present application are an information display method. In one example, the method may be applied to a first client. The first client may display a first live-streaming room page. A user may trigger in the first live-streaming room page an operation for exiting the first live-streaming room page. Correspondingly, the first client may display, in response to the operation for exiting the first live-streaming room page, a first preview page corresponding to the first live-streaming room page. In addition, taking into consideration the requirement of viewing content of other live-streaming room pages after the user views content of the first live-streaming room page, the first client may also display, in the first preview page, recommendation information of at least one recommended live-streaming room. It can be seen therefrom that by using the present solution, more of user needs can be met, so that the experience of the user when viewing a live stream is improved.

## Description

The present disclosure claims the priority to Chinese patent application No. 202211314017.5 filed in the China National Intellectual Property Administration on October 25, 2022, with the title of "information display method and apparatus" and the entire contents of which are incorporated by reference in the present disclosure.

### TECHNICAL FIELD

The present disclosure relates to the technical field of computers, and in particular to an information display method and apparatus.

### BACKGROUND

With the development of computer technology, more and more applications have appeared, and the functions that applications can provide are becoming more and more abundant. In an example, applications can provide live-streaming functions, and users can watch live streaming through applications capable of providing live streaming functions.

At present, the user experience of watching live streaming through applications capable of providing live streaming function is not good. Therefore, there is an urgent need for a solution to improve the user experience of watching the live streaming.

### SUMMARY

In order to solve or at least partially solve the above technical problems, the embodiments of the present disclosure provide an information display method and apparatus.

In a first aspect, the embodiments of the present disclosure provide an information display method, comprising:
displaying a first live streaming room page; and
displaying a first preview page corresponding to the first live streaming room page in response to an operation of exiting the first live streaming room page, and displaying recommendation information of at least one recommended live streaming room in the first preview page.

Optionally, the displaying recommendation information of at least one recommended live streaming room in the first preview page comprises:
displaying recommendation information of at least one recommended live streaming room in the first preview page in response to a preset live streaming recommendation condition being satisfied.

Optionally, the method is applied to a first client, and the preset live streaming recommendation condition comprises any or more of the following:
a playback duration of the first live streaming room page on the first client is longer than or equal to a first duration;
a live streaming room switching operation triggered in the first live streaming room page is not detected;
an operation triggered for a live streaming recommendation control in the first live streaming room page is not detected; or
an interactive operation with a recommended live streaming room displayed in a second preview page is detected, where the second preview page is a page displayed in response to an operation of exiting a second live streaming room, and a second live streaming room page is a live streaming video playback page displayed in a preset historical period of time.

Optionally, a close control corresponding to the recommendation information of at least one recommended live streaming room is further displayed in the first preview page, the method further comprises:
canceling displaying the recommendation information of at least one recommended live streaming room in response to a trigger operation for the close control, and displaying a trigger control for entering the first live streaming room page in the first preview page; and
displaying the first live streaming room page in response to a trigger operation for a trigger control for entering the first live streaming room.

Optionally, the recommendation information of at least one recommended live streaming room comprises:
a live streaming cover of at least one recommended live streaming room; or
a live streaming preview window of at least one recommended live streaming room.

Optionally, in a case where the recommendation information of at least one recommended live streaming room is the live streaming preview window of at least one recommended live streaming room, the method further comprises:
playing an audio of the first live streaming room page, and controlling at least one recommended live streaming room in a mute state.

Optionally, the method is applied to a first client, where the playback duration of the first live streaming room page on the first client is longer than or equal to a second duration, at least one recommended live streaming room comprises a live streaming room with a content similarity higher than a certain threshold with the live streaming video played on the first live streaming room page.

Optionally, the method is applied to a first client, at least one recommended live streaming room comprises a plurality of recommended live streaming rooms; and where the playback duration of the first live streaming room page on the first client is less than a third duration, the plurality of recommended live streaming rooms comprise different types of recommended live streaming rooms.

Optionally, the method further comprises:
displaying a first page in response to a first sliding operation for the first preview page; and
displaying the first preview page in response to a second sliding operation for the first page, and displaying the recommendation information of at least one recommended live streaming room displayed in the first preview page, wherein a sliding direction of the first sliding operation is opposite to a sliding direction of the second sliding operation.

Optionally, at least one recommended live streaming room comprises a first recommended live streaming room, and the method further comprises:
displaying a live streaming video playback page of the first recommended live streaming room in response to a trigger operation for recommendation information of the first recommended live streaming room.

Optionally, the displaying the live streaming video playback page of the first recommended live streaming room comprises:
displaying a live streaming room page of the first recommended live streaming room or displaying a third preview page in response to live streaming of the first recommended live streaming room not ending, wherein the third preview page is a live streaming preview page of the first recommended live streaming room; or
displaying an offline page of the first recommended live streaming room in response to the live streaming of the first recommended live streaming room ending.

Optionally, the displaying the third preview page comprises:
displaying the third preview page, and displaying the recommendation information of at least one recommended live streaming room in the third preview page, wherein the recommendation information of the first recommended live streaming room is in a selected state.

Optionally, the recommendation information of at least one recommended live streaming room displayed on the first preview page comprises recommendation information of the first live streaming room, and the recommendation information of the first live streaming room is in a selected state.

Optionally, the method further comprises:
adjusting a display position of at least one recommendation information in the recommendation information of at least one recommended live streaming room in the first preview page in response to a position adjusting operation for the recommendation information of at least one recommended live streaming room.

Optionally, the method further comprises:
displaying recommendation information of other recommended live streaming rooms different from at least one recommended live streaming room in the first preview page in response to a recommended live streaming room switching operation triggered in the first preview page.

Optionally, the displaying the first live streaming room page comprises:
displaying the first live steaming room page in response to an operation triggered for the first preview page to enter a live streaming room.

In a second aspect, the embodiments of the present disclosure provide an information display apparatus, comprising:
a first display unit, configured to display a first live streaming room page;
a second display unit, configured to display a first preview page corresponding to the first live streaming room page in response to an operation of exiting the first live streaming room page; and
a third display unit, configured to display recommendation information of at least one recommended live streaming room in the first preview page.

Optionally, the third display unit is configured to:
display recommendation information of at least one recommended live streaming room in the first preview page in response to a preset live streaming recommendation condition being satisfied.

Optionally, the apparatus is applied to a first client, and the preset live streaming recommendation condition includes any or more of the followings:
a playback duration of the first live streaming room page on the first client is longer than or equal to a first duration;
a live streaming room switching operation triggered in the first live streaming room page is not detected;
an operation triggered for a live streaming recommendation control in the first live streaming room page is not detected; or
an interactive operation with a recommended live streaming room displayed in a second preview page is detected, where the second preview page is a page displayed in response to an operation of exiting a second live streaming room, and the second live streaming room page is a live streaming video playback page displayed in a preset historical period of time.

Optionally, a close control corresponding to the recommendation information of at least one recommended live streaming room may also be displayed in the first preview page. The apparatus further includes:
a display canceling unit, configured to cancel displaying the recommendation information of at least one recommended live streaming room in response to a trigger operation for the close control, and display a trigger control entering the first live streaming room page in the first preview page; and
a fourth display unit, configured to display the first live streaming room page in response to a trigger operation for the trigger control entering the first live streaming room.

Optionally, the recommendation information of at least one recommended live streaming room includes:
a live streaming cover of at least one recommended live streaming room; or
a live streaming preview window of at least one recommended live streaming room.

Optionally, in the case where the recommendation information of at least one recommended live streaming room is a live streaming preview window of at least one recommended live streaming room, the apparatus further includes:
a playback unit, configured to play an audio of the first live streaming room page;
a control unit, configured to control at least one recommended live streaming room in a mute state.

Optionally, the apparatus is applied to the first client, in the case where a playback duration of the first live streaming room page on the first client is longer than or equal to a second duration, at least one recommended live streaming room may include a live streaming room with a content similarity higher than a certain threshold with a live streaming video played on the first live streaming room page.

Optionally, the apparatus is applied to the first client, at least one recommended live streaming room includes multiple recommended live streaming rooms. Where the playback duration of the first live streaming room page on the first client is less than a third duration, the multiple recommended live streaming rooms include different types of recommended live streaming rooms.

Optionally, the apparatus further includes:
a fifth display unit, configured to display a first page in response to a first sliding operation for the first preview page; and
a sixth display unit, configured to display the first preview page in response to a second sliding operation for the first page, and display recommendation information of at least one recommended live streaming room displayed in the first preview page, where a sliding direction of the first sliding operation is opposite to a sliding direction of the second sliding operation.

Optionally, at least one recommended live streaming room includes a first recommended live streaming room. The apparatus further includes:
a seventh display unit, configured to display a live streaming video playback page of the first recommended live streaming room in response to a trigger operation for the recommendation information of the first recommended live streaming room.

Optionally, the seventh display unit is configured to:
display a live streaming room page of the first recommended live streaming room or display a third preview page in response to the live streaming of the first recommended live streaming room not ending, where the third preview page is a live streaming preview page of the first recommended live streaming room; or
display an offline page of the first recommended live streaming room in response to the live streaming of the first recommended live streaming room ending.

Optionally, displaying the third preview page includes:
displaying the third preview page, and displaying recommendation information of at least one recommended live streaming room in the third preview page, where the recommendation information of the first recommended live streaming room is in a selected state.

Optionally, the recommendation information of at least one recommended live streaming room displayed on the first preview page includes recommendation information of a first live streaming room, and the recommendation information of the first live streaming room is in a selected state.

Optionally, the apparatus further includes:
a position adjusting unit, configured to adjust a display position of at least one recommendation information in the recommendation information of at least one recommended live streaming room in the first preview page in response to a position adjusting operation for the recommendation information of at least one recommended live streaming room.

Optionally, the apparatus further includes:
an eighth display unit, configured to display recommendation information of other recommended live streaming rooms different from the at least one recommended live streaming room in the first preview page in response to a recommended live streaming room switching operation triggered in the first preview page.

Optionally, the first display unit is configured to
display the first live streaming room page in response to an operation of entering the live streaming room for the first preview page.

In a third aspect, the embodiments of the present disclosure provide a device, including a processor, and a memory,
where the processor is used to execute an instruction stored in the memory, enabling the device to execute any method described in the first aspect.

In a fourth aspect, the embodiments of the present disclosure provide a computer readable storage medium, including an instruction, where the instruction indicates a device to execute any method described in the first aspect.

In a fifth aspect, the embodiments of the present disclosure provide a computer program product, where the computer program product, when run on a computer, causes the computer to execute any method described in the first aspect.

### BRIEF DESCRIPTION OF DRAWINGS

In order to more clearly illustrate the technical solutions in the embodiments of the present disclosure or in prior art, the drawings to be used in the description of the embodiments or prior art will be briefly described below. Obviously, the drawings in the following description are only some embodiments recorded in the present disclosure. For those ordinarily skilled in the art that other drawings can be obtained on the basis of these drawings without inventive work.
Fig. 1 is a flow diagram of an information display method according to an embodiment of the present disclosure;
Fig. 2a is a schematic diagram of a first live streaming room page according to an embodiment of the present disclosure;
Fig. 2b is a schematic diagram of a first preview page according to an embodiment of the present disclosure;
Fig. 2c is a schematic diagram of another first preview page according to an embodiment of the present disclosure;
Fig. 2d is a schematic diagram of another first preview page according to an embodiment of the present disclosure;
Fig. 2e is a diagram of still another first preview page according to an embodiment of the present disclosure;
Fig. 3 is a structural diagram of an information display apparatus according to an embodiment of the present disclosure.

### DETAILED DESCRIPTION

In order to enable those skilled in the art to better understand the present disclosure, the following will be combined with the drawings in the present disclosure to clearly and completely describe the technical solutions in the present disclosure. Obviously, the described embodiments are only part of the present disclosure, not all of the embodiments. Based on the embodiments in the present disclosure, all other embodiments obtained by ordinary technicians in this field without creative work are within the scope of protection of this disclosure.

An embodiment of the present disclosure provides an information display method. In an example, the method can be applied to a first client. The first client displays a first live streaming room page. A user triggers an operation of exiting the first live streaming room page in the first live streaming room page. Correspondingly, the first client displays a first preview page corresponding to the first live streaming room page in response to the operation of exiting the first live streaming room page. In addition, considering that the user may have a need to watch the contents of other live streaming room pages after watching the content of the first live streaming room page, the first client may also display recommendation information of at least one recommended live streaming room in the first preview page. Therefore, more needs of the user can be satisfied using this solution, thus improving the information acquisition efficiency, and improving the user experience of watching live streaming.

Various non-restrictive implementations of the present disclosure will be described below in detail with reference to the accompanying drawings.

### Exemplary method

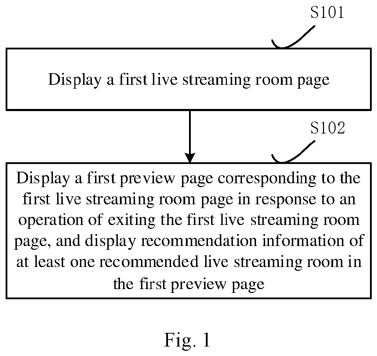

Referring to Fig. 1, Fig. 1 is a flow diagram of an information display method according to an embodiment of the present disclosure. In this embodiment, the information display method may be executed by a first client, and the first client, for example, may be a client that is logged in with an account. As an example, the method, for example, may include the following steps: S101-S102.

S101: displaying a first live streaming room page.

In an embodiment of the present disclosure, the first live streaming room page, for example, may be a live streaming room page corresponding to a first live streaming room. The live streaming room page corresponding to the first live streaming room may be a page displayed after entering the first live streaming room. The live streaming room page corresponding to the first live streaming room may also be understood as a content stream page corresponding to the first live streaming room.

In an example, the user triggers an operation of entering the first live streaming room page in a first page. Correspondingly, the first client displays the first live streaming room page in response to the operation of entering the first live streaming room page. The embodiment of the present disclosure has no specific limitation on the first page. In an example, the first page, for example, may be a first preview page corresponding to the first live streaming room page, and a user can trigger an operation of entering the first live streaming room page in the first preview page. In another example, the first page, for example, may be another page displayed on the first client, and the user can trigger the operation of entering the first live streaming room page based on recommendation information of a first live streaming room displayed in the first page. For example, the first page is an instant communication page, which includes a sharing link of the first live streaming room, and the user can trigger the operation of entering the first live streaming room page by clicking the sharing link.

S102: displaying a first preview page corresponding to the first live streaming room page in response to an operation of exiting the first live streaming room page, and displaying recommendation information of at least one recommended live streaming room in the first preview page.

After the client displays the first live streaming room page, the user may trigger the operation of exiting the first live streaming room page. Correspondingly, the client displays the first preview page corresponding to the first live streaming room page in response to the operation of exiting the first live streaming room page. The first preview page is used for playing a preview video of a live streaming video played in the first live streaming room page. Or rather, the first preview page is a preview stream page of the first live streaming room.

In addition, in an embodiment of the present disclosure, considering that the user may have a need to watch the contents of other live streaming room pages after watching the content of the first live streaming room page, the first client can also display recommendation information of at least one recommended live streaming room in the first preview page.

As an example, the first client displays recommendation information of at least one recommended live streaming room in the first preview page in the case where a preset live streaming recommendation condition is satisfied. If the preset recommendation condition is met, it means that the user is more likely to watch the contents of the other live streaming room pages. Determining the at least one recommended live streaming room in this way can facilitate the user to efficiently acquire the live streaming room they are interested in.

In an example, if a playback duration of the first live streaming room page on the first client is greater than or equal to a first duration, the user may be interested in the content played in the first live streaming room page. Correspondingly, it is indicated that the user is more likely to watch the contents of other live streaming room pages. Therefore, in an example, the preset live streaming condition may include that the playback duration of the first live streaming room page on the first client is greater than or equal to the first duration. The embodiment of the present disclosure has no specific limitation on the first duration, and the first duration may be set according to actual conditions.

In another example, the user may trigger a live streaming room switching operation in a first live streaming room page. For example, the user triggers a slide-down operation in the first live streaming room page, such that a page displayed on the first client is switched to a live streaming room page corresponding to another live streaming room from the live streaming room page corresponding to the first live streaming room. If the user triggers the live streaming room switching operation in the first live streaming room page, it is indicated that the user has watched the contents of the other live streaming room page. Correspondingly, for this case, it may be regarded that after the user triggers the operation of exiting the first live streaming room page, the possibility of watching the contents of other live streaming room pages is relatively low. Correspondingly, if the user does not trigger the live streaming room switching operation in the first live streaming room page, it is indicated that the user is more likely to watch the contents of the other live streaming room page. Therefore, as an example, the preset live streaming condition may include that the live streaming room switching operation triggered in the first live streaming room page is not detected.

In another example, the first live streaming room page may include a live streaming recommendation control, and the user can watch live streaming room pages corresponding to more live streaming rooms by triggering the live streaming recommendation control. If the user triggers an operation for the live streaming recommendation control in the first live streaming room page, it is indicated that the user has watched the contents of other live streaming room pages. Accordingly, for this case, it may be regarded that the possibility of watching the contents of other live streaming room pages is relatively low after the user triggers the operation of exiting the first live streaming room page. Correspondingly, if the user does not trigger the operation for the live streaming recommendation control in the first live streaming room page, it is indicated that the user is more likely to watch the contents of other live streaming room pages. Therefore, as an example, the preset live streaming condition may include that the operation triggered for the live streaming recommendation control in the first live streaming room page is not detected.

In another example, before watching the first live streaming room page, the user may watch at least one second live streaming room page. Correspondingly, the user may trigger an operation of exiting the second live streaming room page. After the user trigger the operation of exiting the second live streaming room page, the first client displays a second preview page corresponding to the second live streaming room page in response to the operation of exiting the second live streaming room page. In addition, the first client may also display recommendation information of a recommended live streaming room in the second preview page. If the user interacts with the recommendation information of the recommended live streaming room displayed in the second preview page, for example, if the user triggers a viewing operation for the recommendation information of one or more recommended live streaming rooms, it is indicated that the user is more interested in the recommended live streaming room. Correspondingly, after the user trigger the operation of exiting the first live streaming room page, the user is more likely to watch the contents of other live streaming room pages. Therefore, as an example, the preset live streaming condition may include that an interactive operation with the recommended live streaming room displayed in the second preview page is detected. The second preview page is a page displayed in response to the operation triggered for exiting a second live streaming room, and the second live streaming room page is a live streaming video playback page displayed within a preset historical period of time. The interactive operation with the recommended live streaming room displayed in the second preview page mentioned here, for example, may be a viewing operation for the recommendation information of the recommended live streaming room displayed in the second preview page. The embodiment of the present disclosure has no specific limitation on the preset historical period of time. The preset historical period of time may be a time period from a certain historical moment to a moment when the first client displays the first live streaming room page, and a time length of the historical period of time may be determined according to the actual situation, for example, the time length of the historical period of time may be one week, or three natural days, and so on, which are not enumerated here.

In an example, the first client displays recommendation information of at least one recommended live streaming room in a preset area of the first preview page. For example, the recommendation information of at least one recommended live streaming room may be displayed in one or more areas at the top, bottom, left side or right side in the first preview page. In addition, for the recommendation information of at least one recommended live streaming room, the recommendation information of one recommended live streaming room may correspond to one display area.

In an example, a close control corresponding to the recommendation information of at least one live streaming room may also be displayed in the first preview page. The close control may be used for triggering cancelling displaying the recommendation information of the at least one live streaming room. For this case, in an example, the user can trigger an operation for the close control. Correspondingly, the first client can cancel displaying the recommendation information of at least one recommended live streaming room in response to the trigger operation for the close control.

In addition, considering that the user triggering the operation for the close control may be because the recommendation information of the at least one live streaming room causes interference for the user to watch a video stream played on the first preview page, for this case, the client can also display a trigger control used for entering the first live streaming room page in the first preview page, so as to facilitate the user to trigger an operation for the trigger control used for entering the first live streaming room page. Correspondingly, after the user triggers the operation for the trigger control used for entering the first live streaming room page, the client displays the first live streaming room page in response to a trigger operation for the trigger control used for entering the first live streaming room page, such that the user can watch a live streaming video of the first live streaming room page in the first live streaming room page.

The embodiment of the present disclosure has no specific limitation on the recommendation information of at least one recommended live streaming room, and the recommendation information of at least one recommended live streaming room may be information related to at least one recommended live streaming room. As an example, the information of at least one recommended live streaming room may be a live streaming cover of at least one recommended live streaming room. As another example, the information of at least one recommended live streaming room may be a live streaming preview window of at least one recommended live streaming room.

In an example, considering that in the case where the information of at least one recommended live streaming room is the live streaming preview window of at least one recommended live streaming room, the content played in the live streaming preview window may include an image, and an audio. The content played in the first preview page is a preview video of a live streaming video played on the first live streaming room page, and the preview video also includes an image, and an audio. However, if multiple audios are simultaneously played on the first client, interference will be brought to the user, affecting the user experience. To avoid this problem, in an implementation of the embodiment of the present disclosure, the first client can play the audio in the first live streaming room page, i.e., playing the audio of the live streaming video played on the first live streaming room page, and controls at least one recommended live streaming room in a mute state, i.e., not playing the audio in the at least one live streaming preview window.

At least one recommended live streaming room may be calculated and issued to the first client by a server side. As an example, at least one recommended live streaming room may be obtained according to a certain recommendation algorithm. As a specific example, the recommendation algorithm may be determined according to the playback duration of the first live streaming room page on the first client.

In an example, if the playback duration of the first live streaming room page on the first client is longer than or equal to a second duration, it is indicated that the user is more interested in the content played on the first live streaming room page. In this case, it is indicated that the user is more interested in the live streaming room with high content similarity with the content of a live streaming video played on the first live streaming room page. Therefore, at least one recommended live streaming room may include a live streaming room with a content similarity higher than a certain threshold with the live streaming video played on the first live streaming room page. The live streaming room with the content similarity higher than a certain threshold with the live streaming video played on the first live streaming room page is a live streaming room with higher content similarity with the content of the live streaming video played on the first live streaming room page.

The embodiment of the present disclosure has no specific limitation on the second duration, and the second duration may be determined according to the actual condition, for example, the second duration may be 3 minutes. The embodiment of the present disclosure has also no specific limitation on the certain threshold, and the certain threshold may be determined according to actual conditions.

In another example, if the playback duration of the first live streaming room page on the first client is less than the second duration, it is indicated that the user is not interested in the content played on the first live streaming room page. For this case, at least one recommended live streaming room may include different types of recommended live streaming rooms, thus facilitating the users to select the live streaming room of interest to them from the different types of recommended live streaming rooms.

In an example, at least one recommended live streaming room may include the first live streaming room, the recommendation information of the first live streaming room may be in a selected state, thus prompting the user that a live streaming room corresponding to the current first preview page is the first live streaming room.

In an example, at least one recommended live streaming room may include a first recommended live streaming room. The user may trigger an operation for the recommendation information of the first recommended live streaming room, for example, the user may click the recommendation information of the first recommended live streaming room. Correspondingly, the first client displays a live streaming video playback page of the first recommended live streaming room.

The live streaming video playback page of the first recommended live streaming room may be a page for playing a live streaming video of the first recommended live streaming room. In an example, if the live streaming of the first recommended live streaming room has not ended, the live streaming video playback page may be a live streaming room page of the first recommended live streaming room, or the live streaming video playback page may be a third preview page. The third preview page is a live streaming preview page of the first recommended live streaming room, which is used for playing a preview video of the live streaming video played in the first recommended live streaming room. In another example, if the live streaming of the first recommended live streaming room ends (i.e., the first recommended live streaming room has been turned off), the live streaming video playback page, for example, may be an offline page of the first recommended live streaming room. In an example, the offline page may include a live streaming end prompt information, and the live streaming end prompt information is used for prompting that the first recommended live streaming room has been turned off.

In an example, if the live streaming video playback page corresponding to the first recommended live streaming room is the third preview page, in addition to displaying the third preview page, the first client can further display the recommendation information of at least one recommended live streaming room on the third preview page. Alternatively, it may be understood that the content displayed in the first preview page, except the recommendation information of at least one recommended live streaming room, is replaced with the third preview page. In addition, to facilitate the user to determine a live streaming room corresponding to the current third preview page, a state of the recommendation information of the first recommended live streaming room displayed on the third preview page may be a selected state.

In an example, if the user is not satisfied with a display layout of the recommendation information of at least one recommended live streaming room in the first preview page, the user can adjust the display position of the recommendation information of at least one recommended live streaming room. Specifically, the user triggers a position adjusting operation for the recommendation information of at least one recommended live streaming room. Correspondingly, in response to the position adjusting operation, the first client adjusts the display position of at least one recommendation information in the recommendation information of at least one recommended live streaming room in the first preview page.

As an example, the position adjusting operation may include adjusting recommendation information of a second recommended live streaming room in at least one recommended live streaming room to a second position from an originally displayed first position.

As another example, the position adjusting operation may include interchanging display positions of the recommendation information of the second recommended live streaming room and the recommendation information of a third recommended live streaming room.

In another example, if the user is not interested in the at least one recommended live streaming room, the user may trigger a recommended live streaming room switching operation in the first preview page. For example, the user triggers the recommended live streaming room switching operation by clicking a live streaming room switching control displayed in the first preview page. After the user triggers the recommended live streaming room switching operation, the first client displays the recommendation information of other recommended live streaming rooms different from at least one recommended live streaming room in the first preview page in response to the recommended live streaming room switching operation. As an example, the information of partial recommended live streaming room in the at least one recommended live streaming room may be replaced with the recommendation information of other recommended live streaming rooms. For example, the recommendation information of four recommended live streaming rooms is displayed in the first preview page, which are recommendation information of a recommended live streaming room 1, recommendation information of a recommended live streaming room 2, recommendation information of a recommended live streaming room 3, and recommendation information of a recommended live streaming room 4. After the user triggers the recommended live streaming room switching operation, the recommendation information of the recommended live streaming room 4 is replaced with recommendation information of a recommended live streaming room 5. As another example, the information of all recommended live streaming rooms in the at least one recommended live streaming room may be replaced with the recommendation information of other recommended live streaming rooms. For example, the recommendation information of four recommended live streaming rooms is displayed in the first preview page, which are recommendation information of a recommended live streaming room 1, recommendation information of a recommended live streaming room 2, recommendation information of a recommended live streaming room 3, and recommendation information of a recommended live streaming room 4. After the user triggers the recommended live streaming room switching operation, the recommendation information of the four recommended live streaming rooms is replaced with recommendation information of another four recommended live streaming rooms.

In an example, the user can also trigger a first sliding operation in the first preview page, i.e., triggering a slide-up operation. The first client displays a first page in response to the first sliding operation. The embodiment of the present disclosure has no specific limitation on the first page. The first page may be a preview page of another live streaming room, e.g., a fourth preview page, or a short video playback page, which is not specifically limited by the embodiment of the present disclosure.

After the first client displays the first page, the user can further trigger a second sliding operation in the first page, and a sliding direction of the second sliding operation is opposite to the sliding direction of the second sliding operation. For example, the first sliding operation is a slide-up operation, and the second sliding operation is a slide-down operation. For another example, the first sliding operation is a slide-down operation, and the second sliding operation is a slide-up operation. Correspondingly, the first client displays the first preview page in response to the second sliding operation, and displays the recommendation information of at least one recommended live streaming room in the first preview page, thus facilitating the user to view the first preview page and the recommendation information of at least one recommended live streaming room.

The information display method provided by the embodiments of the present disclosure is introduced above. In the following, the technical solutions of the embodiments of the present disclosure are introduced with reference to the accompanying drawings.

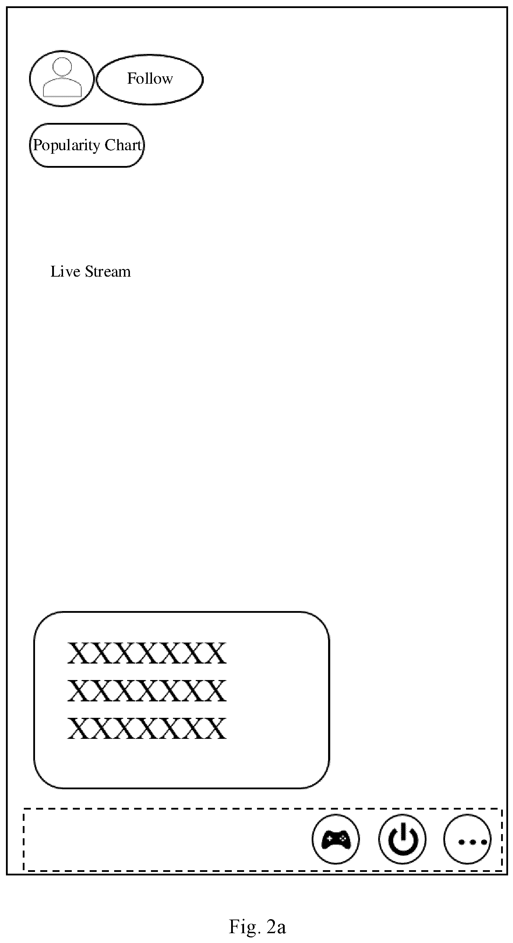

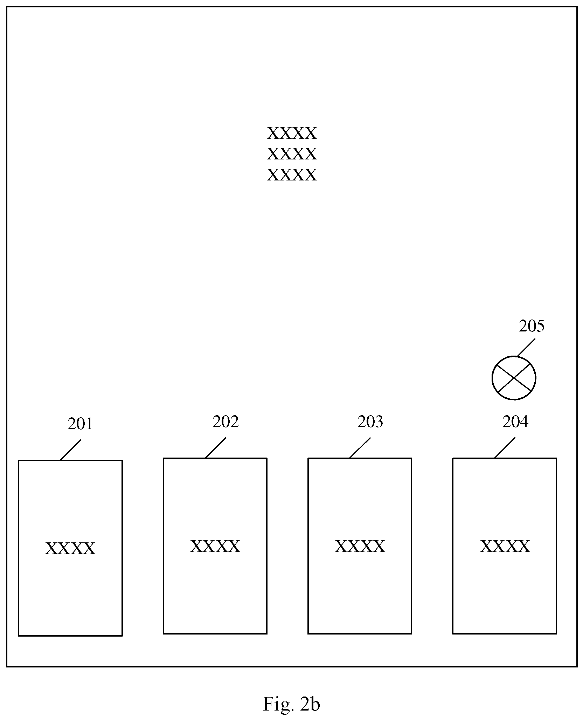

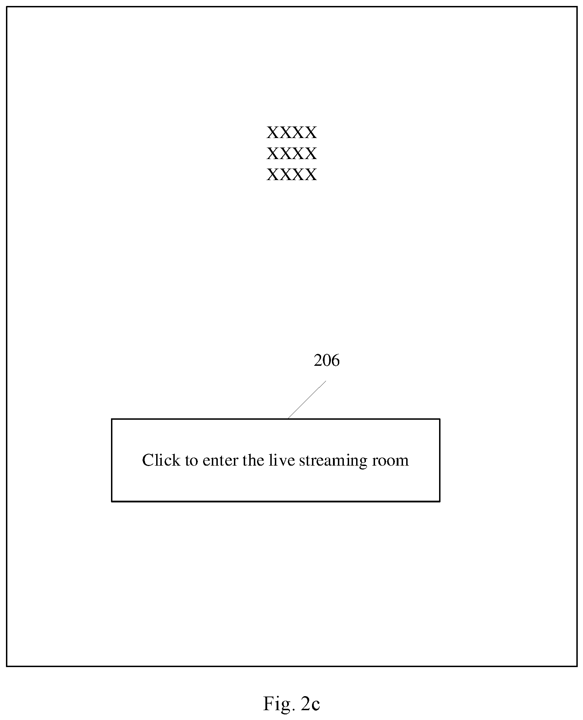

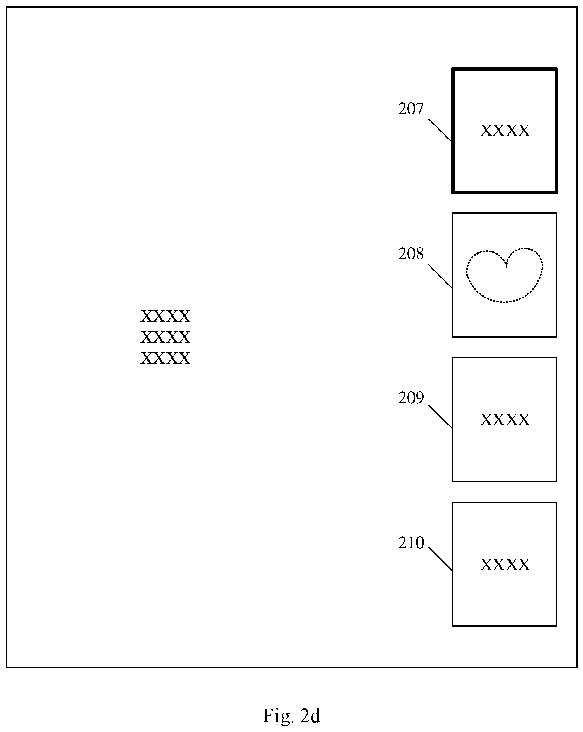

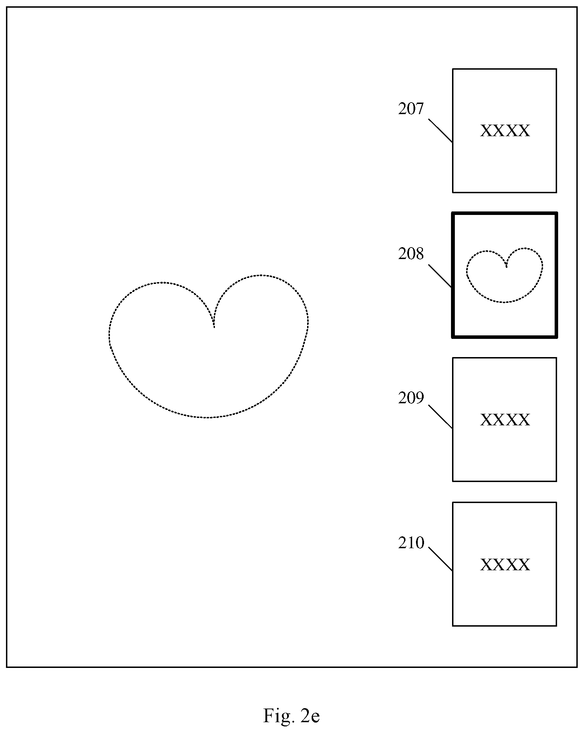

Referring to Fig. 2a, Fig. 2 is a schematic diagram of a first live streaming room page according to an embodiment of the present disclosure.

As an example, after the user triggers an operation of exiting the first live streaming room page, the first client displays the first preview page, and the first preview page is as shown in Fig. 2b. The first preview page shown in Fig. 2b includes a live streaming cover 201 of a recommended live streaming room a, a live streaming cover 202 of a recommended live streaming room b, a live streaming cover 203 of a recommended live streaming room c, and a live streaming cover 204 of a recommended live streaming room d. In addition, the first preview page may also include a close control 205.

In an example, the user may click the live streaming cover 201 of the recommended live streaming room a to enter the live streaming room a; the user may click the live streaming cover 202 of the recommended live streaming room b to enter the live streaming room b; the user may click the live streaming cover 203 of the recommended live streaming room c to enter the live streaming room c; the user may click the live streaming cover 204 of the recommended live streaming room d to enter the live streaming room d.

In another example, the user can trigger an operation through the close control 205. Correspondingly, a page displayed on the client may be as shown in Fig. 2c, the live streaming cover 201, the live streaming cover 202, the live streaming cover 203 and the live streaming cover 204 are no longer displayed in the first preview page. In addition, a trigger control 206 used for entering the first live streaming room is displayed in the first preview page. If the user triggers an operation for the trigger control 206 used for entering the first live streaming room, the page displayed on the first client is switched to a first live streaming room page shown in Fig. 2a.

As another example, after the user triggers an operation of exiting the first live streaming room page, the first client displays a first preview page, and the first preview page is as shown in Fig. 2d. The first preview page shown in Fig. 2d includes a live streaming cover 207 of a first live streaming room a, a live streaming cover 208 of a recommended live streaming room e, a live streaming cover 209 of a recommended live streaming room f, and a live streaming cover 210 of a recommended live streaming room g. The live streaming cover 207 is in a selected state (which is reflected in thickening an edge part of the live streaming cover in Fig. 2d).

In an example, the user clicks the live streaming cover 208 of the recommended live streaming room e. Correspondingly, the first client displays a preview page of the live streaming room e, as shown in Fig. 2e, the preview page of the live streaming room e still includes the live streaming cover 207 of the first live streaming room, the live streaming cover 208 of the recommended live streaming room e, the live streaming cover 209 of the recommended live streaming room f, and the live streaming cover 210 of the recommended live streaming room g. The live streaming cover 208 is in a selected state (which is reflected in thickening an edge part of the live streaming cover in Fig. 2d).

It should be noted that Fig. 2a to Fig. 2e are merely shown for the convenience of understanding the solution, and do not constitute the limitation of the embodiment of the present disclosure.

### Exemplary device

Based on the method provided by the embodiments above, an embodiment of the present disclosure further provides an apparatus, which is introduced below with reference to the accompanying drawings.

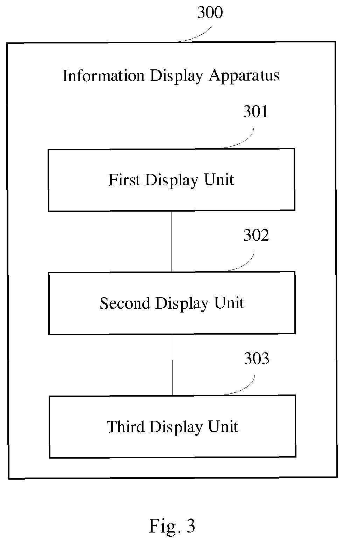

Referring to Fig. 3, Fig. 3 is a structural diagram of an information display apparatus according to an embodiment of the present disclosure. The apparatus 300, for example, may specifically include: a first display unit 301, a second display unit 302, and a third display unit 303.

The first display unit 301 is configured to display a first live streaming room page.

The second display unit 302 is configured to display a first preview page corresponding to the first live streaming room page in response to an operation of exiting the first live streaming room page.

The third display unit 303 is configured to display recommendation information of at least one recommended live streaming room in the first preview page.

Alternatively, the third display unit 303 is configured to:
display recommendation information of at least one recommended live streaming room in the first preview page in response to a preset live streaming recommendation condition being satisfied.

Alternatively, the apparatus is applied to a first client, and the preset live streaming recommendation condition includes any or more of the followings:
a playback duration of the first live streaming room page on the first client is longer than or equal to a first duration;
a live streaming room switching operation triggered in the first live streaming room page is not detected;
an operation triggered for a live streaming recommendation control in the first live streaming room page is not detected; or
an interactive operation with a recommended live streaming room displayed in a second preview page is detected, where the second preview page is a page displayed in response to an operation of exiting a second live streaming room, and the second live streaming room page is a live streaming video playback page displayed in a preset historical period of time.

Alternatively, a close control corresponding to the recommendation information of at least one recommended live streaming room may also be displayed in the first preview page. The apparatus further includes:
a display canceling unit, configured to cancel displaying the recommendation information of at least one recommended live streaming room in response to a trigger operation for the close control, and display a trigger control entering the first live streaming room page in the first preview page; and
a fourth display unit, configured to display the first live streaming room page in response to a trigger operation for the trigger control entering the first live streaming room.

Alternatively, the recommendation information of at least one recommended live streaming room includes:
a live streaming cover of at least one recommended live streaming room; or
a live streaming preview window of at least one recommended live streaming room.

Alternatively, in the case where the recommendation information of at least one recommended live streaming room is a live streaming preview window of at least one recommended live streaming room, the apparatus further includes:
a playback unit, configured to play an audio of the first live streaming room page;
a control unit, configured to control at least one recommended live streaming room in a mute state.

Alternatively, the apparatus is applied to the first client, in the case where a playback duration of the first live streaming room page on the first client is longer than or equal to a second duration, at least one recommended live streaming room may include a live streaming room with a content similarity higher than a certain threshold with a live streaming video played on the first live streaming room page.

Alternatively, the apparatus is applied to the first client, at least one recommended live streaming room includes multiple recommended live streaming rooms. Where the playback duration of the first live streaming room page on the first client is less than a third duration, the multiple recommended live streaming rooms include different types of recommended live streaming rooms.

Alternatively, the apparatus further includes:
a fifth display unit, configured to display a first page in response to a first sliding operation for the first preview page; and
a sixth display unit, configured to display the first preview page in response to a second sliding operation for the first page, and display recommendation information of at least one recommended live streaming room displayed in the first preview page, where a sliding direction of the first sliding operation is opposite to a sliding direction of the second sliding operation.

Alternatively, at least one recommended live streaming room includes a first recommended live streaming room. The apparatus further includes:
a seventh display unit, configured to display a live streaming video playback page of the first recommended live streaming room in response to a trigger operation for the recommendation information of the first recommended live streaming room.

Alternatively, the seventh display unit is configured to:
display a live streaming room page of the first recommended live streaming room or display a third preview page in response to the live streaming of the first recommended live streaming room not ending, where the third preview page is a live streaming preview page of the first recommended live streaming room; or
display an offline page of the first recommended live streaming room in response to the live streaming of the first recommended live streaming room ending.

Alternatively, displaying the third preview page includes:
displaying the third preview page, and displaying recommendation information of at least one recommended live streaming room in the third preview page, where the recommendation information of the first recommended live streaming room is in a selected state.

Alternatively, the recommendation information of at least one recommended live streaming room displayed on the first preview page includes recommendation information of a first live streaming room, and the recommendation information of the first live streaming room is in a selected state.

Alternatively, the apparatus further includes:
a position adjusting unit, configured to adjust a display position of at least one recommendation information in the recommendation information of at least one recommended live streaming room in the first preview page in response to a position adjusting operation for the recommendation information of at least one recommended live streaming room.

Alternatively, the apparatus further includes:
an eighth display unit, configured to display recommendation information of other recommended live streaming rooms different from the at least one recommended live streaming room in the first preview page in response to a recommended live streaming room switching operation triggered in the first preview page.

Alternatively, the first display unit 301 is configured to
display the first live streaming room page in response to an operation of entering the live streaming room for the first preview page.

As the apparatus 300 is an apparatus corresponding to the information display method provided by the above method embodiments, the specific implementations of various units of the apparatus 300 are the same as those of the above method embodiments. Therefore, specific implementations of various units of the apparatus 300 may refer to related description parts of the above method embodiments, and thus will not be described in detail here.

The embodiment of the present disclosure further provides a device, including a processor, and a memory.

The processor is configured to execute an instruction stored in the memory, thus enabling the device to execute the information display method according to any of above embodiments.

The embodiment of the present disclosure further provides a computer readable storage medium, including an instruction. The instruction is configured to indicate a device to execute the information display method according to any of above embodiments.

The embodiment of the present disclosure further provides a computer program product, the computer program product, when run on a computer, enables the computer to execute the information display method according to any of above embodiments.

It may be understood that before using the technical solutions disclosed in various embodiments of the present disclosure, the user should be informed of the types, scope of use, use scenarios, etc. of involved personal information in an appropriate way, and authorization can be obtained from the user. For example, in response to receiving an active request of the user, prompt information is sent to the user to clearly remind the user that a requested operation needs to acquire and use the personal information of the user. Therefore, the user can independently choose whether to provide personal information to software or hardware such as electronic devices, applications, servers or storage media that perform the operation of the technical solution of the present disclosure according to the prompt information.

As an alternative but non-restrictive implementation, in response to receiving the active request of the user, a way of sending the prompt information to the user may be, for example, a pop-up window, in which the prompt information can be presented in text. In addition, the pop-up window can also carry a selection control for the user to choose "agree" or "disagree" to provide personal information to the electronic device.

It may be understood that the above process of informing and obtaining user authorization is only schematic, which does not limit the implementation of the present disclosure. Other ways to meet relevant laws and regulations may also be applied to the implementation of the present disclosure.

After considering the specification and practicing the invention disclosed here, those skilled in the art will easily think of other implementation methods of the present disclosure. The present disclosure is intended to cover any variation, use or adaptive change of the present disclosure, which follows the general principles of the present disclosure and includes common knowledge or conventional technical means in the technical field of the present disclosure that are not disclosed in the present disclosure. The specification and embodiments are only regarded as exemplary, and the true scope and spirit of the present disclosure are indicated by the following claims.

It should be understood that the present disclosure is not limited to the precise structure described above and shown in the drawings, and various modifications and changes can be made without departing from its scope. The scope of the present disclosure is limited only by the attached claims.

The above is only a preferred embodiment of the present disclosure and is not intended to limit the present disclosure. Any modifications, equivalent substitutions, improvements, etc. made within the spirit and principles of the present disclosure shall be included in the scope of protection of the present disclosure.

## Claims

1. An information display method, comprising:
displaying a first live streaming room page; and
displaying a first preview page corresponding to the first live streaming room page in response to an operation of exiting the first live streaming room page, and displaying recommendation information of at least one recommended live streaming room in the first preview page.

2. The method according to claim 1, wherein the displaying recommendation information of at least one recommended live streaming room in the first preview page comprises:
displaying recommendation information of at least one recommended live streaming room in the first preview page in response to a preset live streaming recommendation condition being satisfied.

3. The method according to claim 2, wherein the method is applied to a first client, and the preset live streaming recommendation condition comprises any or more of the following:
a playback duration of the first live streaming room page on the first client is longer than or equal to a first duration;
a live streaming room switching operation triggered in the first live streaming room page is not detected;
an operation triggered for a live streaming recommendation control in the first live streaming room page is not detected; or
an interactive operation with a recommended live streaming room displayed in a second preview page is detected, where the second preview page is a page displayed in response to an operation of exiting a second live streaming room, and a second live streaming room page is a live streaming video playback page displayed in a preset historical period of time.

4. The method according to claim 1, wherein a close control corresponding to the recommendation information of at least one recommended live streaming room is further displayed in the first preview page, the method further comprises:
canceling displaying the recommendation information of at least one recommended live streaming room in response to a trigger operation for the close control, and displaying a trigger control for entering the first live streaming room page in the first preview page; and
displaying the first live streaming room page in response to a trigger operation for a trigger control for entering the first live streaming room.

5. The method according to claim 1, wherein the recommendation information of at least one recommended live streaming room comprises:
a live streaming cover of at least one recommended live streaming room; or
a live streaming preview window of at least one recommended live streaming room.

6. The method according to claim 5, wherein in a case where the recommendation information of at least one recommended live streaming room is the live streaming preview window of at least one recommended live streaming room, the method further comprises:
playing an audio of the first live streaming room page, and controlling at least one recommended live streaming room in a mute state.

7. The method according to claim 1, wherein the method is applied to a first client, where the playback duration of the first live streaming room page on the first client is longer than or equal to a second duration, at least one recommended live streaming room comprises a live streaming room with a content similarity higher than a certain threshold with the live streaming video played on the first live streaming room page.

8. The method according to claim 1, wherein the method is applied to a first client, at least one recommended live streaming room comprises a plurality of recommended live streaming rooms; and where the playback duration of the first live streaming room page on the first client is less than a third duration, the plurality of recommended live streaming rooms comprise different types of recommended live streaming rooms.

9. The method according to claim 1, further comprising:
displaying a first page in response to a first sliding operation for the first preview page; and
displaying the first preview page in response to a second sliding operation for the first page, and displaying the recommendation information of at least one recommended live streaming room displayed in the first preview page, wherein a sliding direction of the first sliding operation is opposite to a sliding direction of the second sliding operation.

10. The method according to claim 1, wherein at least one recommended live streaming room comprises a first recommended live streaming room, and the method further comprises:
displaying a live streaming video playback page of the first recommended live streaming room in response to a trigger operation for recommendation information of the first recommended live streaming room.

11. The method according to claim 10, wherein the displaying the live streaming video playback page of the first recommended live streaming room comprises:
displaying a live streaming room page of the first recommended live streaming room or displaying a third preview page in response to live streaming of the first recommended live streaming room not ending, wherein the third preview page is a live streaming preview page of the first recommended live streaming room; or
displaying an offline page of the first recommended live streaming room in response to the live streaming of the first recommended live streaming room ending.

12. The method according to claim 11, wherein the displaying the third preview page comprises:
displaying the third preview page, and displaying the recommendation information of at least one recommended live streaming room in the third preview page, wherein the recommendation information of the first recommended live streaming room is in a selected state.

13. The method according to claim 12, wherein the recommendation information of at least one recommended live streaming room displayed on the first preview page comprises recommendation information of the first live streaming room, and the recommendation information of the first live streaming room is in a selected state.

14. The method according to claim 1, further comprising:
adjusting a display position of at least one recommendation information in the recommendation information of at least one recommended live streaming room in the first preview page in response to a position adjusting operation for the recommendation information of at least one recommended live streaming room.

15. The method according to claim 1, further comprising:
displaying recommendation information of other recommended live streaming rooms different from at least one recommended live streaming room in the first preview page in response to a recommended live streaming room switching operation triggered in the first preview page.

16. The method according to claim 1, wherein the displaying the first live streaming room page comprises:
displaying the first live steaming room page in response to an operation triggered for the first preview page to enter a live streaming room.

17. An information display apparatus, comprising:
a first display unit, configured to display a first live streaming room page;
a second display unit, configured to display a first preview page corresponding to the first live streaming room page in response to an operation of exiting the first live streaming room page; and
a third display unit, configured to display recommendation information of at least one recommended live streaming room in the first preview page.

18. A device, comprising a processor, and a memory,
wherein the processor is used to execute an instruction stored in the memory, enabling the device to execute the method according to any one of claims 1 to 16.

19. A computer readable storage medium, comprising an instruction, wherein the instruction indicates a device to execute the method according to any one of claims 1 to 16.

20. A computer program product, wherein the computer program product, when run on a computer, causes the computer to execute the method according to any one of claims 1 to 16.
